# EUROPEAN PATENT APPLICATION

(11) **EP 3 451 734 A1**
(43) Date of publication of application: **06.03.2019**
(21) Application number: 17788594.4
(22) Date of filing: 29.03.2017
(51) Int. Cl.: H04W 28/06, H04L 12/811, H04L 1/18, H04L 29/06

(54) **DATA TRANSMISSION METHOD AND RELEVANT DEVICE**

(30) Priority: 29.04.2016 CN 201610282814
(71) Applicant: China Academy of Telecommunications Technology, Hai Dian District Beijing 100191 (CN)
(72) Inventor: LIU, Jiamin, Beijing 100191 (CN)
(74) Representative: Körfer, Thomas
(86) International application number: PCT/CN2017/078635
(87) International publication number: WO 2017/185941

(57) **Abstract**

Disclosed are a data transmission method and a relevant device, which are used for solving the problem that functional partitioning of an integrated node and a transmission node in data transmission cannot ensure a good switching experience, causing relatively low system efficiency. The method comprises: an integrated node recombining an RLC service data unit (SDU) into an RLC protocol data unit (PDU); and the integrated node transmitting the RLC PDU to a transmission node serving a terminal, and the transmission node transmitting the RLC PDU after recombination according to the size of a scheduled transmission block.

## Description

This application claims the benefit of Chinese Patent Application No. 201610282814.8, filed with the Chinese Patent Office on April 29, 2016, and entitled "Data transmission method and related device", which is hereby incorporated by reference in its entirety.

### Field

The present application relates to the field of communications, and particularly to a data transmission method and related device.

### Background

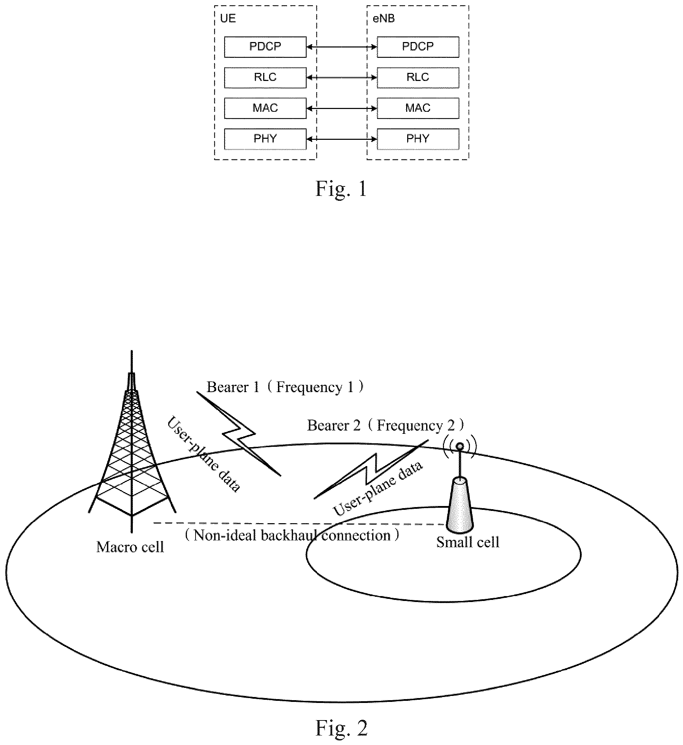

Data are typically transmitted between a User Equipment (UE) and an evolved Node B (eNB) through a Packet Data Convergence Protocol (PDCP) layer, a Radio Link Control (RLC) layer, a Medium Access Control (MAC) layer, and a Physical (PHY) layer, where the data are processed differently at each layer. The PDCP layer generally performs security operations, and header compression and decompression, e.g., encryption and integrity protection, Robust Header Compression (ROHC) and Decompression, etc. The RLC layer generally performs segmentation, concatenation, and sequential delivery of the data, and data transmission guaranteeing of an Automatic Repeat Request (ARQ); and the MAC layer generally performs scheduling, concatenation processing of different logic channels and Hybrid Automatic Repeated Request (HARQ) operations. The physical layer generally transmits a transport block via an air interface. Fig. 1 illustrates a schematic structural diagram of a user-plane protocol stack.

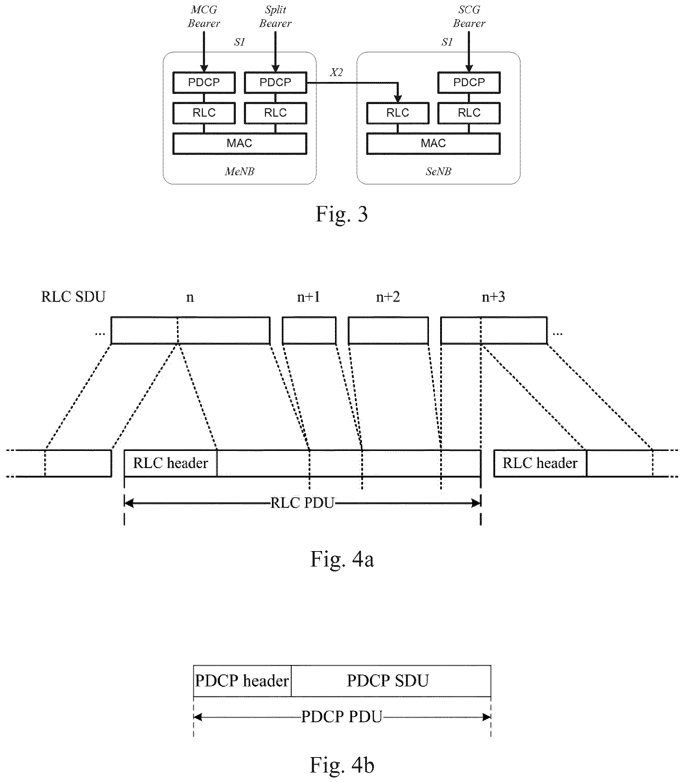

Fig. 2 illustrates a schematic diagram of a dual-connectivity architecture where the UE connected with a macro eNB is further connected with a radio access node, and transmits wirelessly over resources of the two nodes. In the dual-connectivity architecture, the data of the UE can be offloaded between different eNBs, and the data are transmitted respectively by the two eNBs at the RLC layer, and the respective layers below the RLC. Fig. 3 illustrates a schematic diagram of a radio protocol architecture in a dual-connectivity scenario. Fig.4a illustrates a schematic diagram of recomposing a packet at the RLC layer. The RLC layer concatenates RLC Service Data Units (SDUs) and adds an RLC header thereto, thus resulting in an RLC Protocol Data Unit (PDU). Fig. 4b illustrates a schematic diagram of recomposing a packet at the PDCP layer. A DPCP header is added to a PDCP SDU, thus resulting in a PDCP PDU.

In future development of a mobile communication system, in order to better satisfy a user demand and greatly improve the capacity and throughput of a network, more transmitting nodes will be introduced thereto, thus resulting in a future ultra-dense network. In the ultra-dense network, in order to manage uniformly the control planes of the large number of transmitting nodes, a part of the protocol functions shall be performed centrally. In this scenario, functions of a central node, and distributed functions of each transmitting node shall be well allocated thereto so that a message can be better processed, and a good handover experience of the UE moving between the transmitting nodes can be guaranteed.

The RLC layer of the central node shall compose a PDU according to the size of a transport block scheduled at the MAC layer of a transmitting node, and interaction between the MAC layer of the transmitting node, and the RLC layer of the central node shall be finished in a short period of time (e.g., 1ms). Accordingly when there is a non-ideal backhaul connection between the transmitting node and the central node, and a delay of interaction between the MAC layer of the transmitting node, and the RLC layer of the central node is at an order of milliseconds, a data packet can not be composed and transmitted normally.

If a PDU is composed at the RLC layer of the transmitting node, then there will be no delay, but since a lot of user data are stored in various buffers at the RLC layer including a transmission buffer, a retransmission buffer, a reception buffer, etc., but also complex state information is stored at the RLC layer, the buffered user data and state information shall be cleared, or forwarded to a new transmitting node when the UE is to be switched between the different transmitting nodes. When the buffered user data and state information are cleared, some data may be lost or a repeated operation may be occurred, and when the information are forwarded, extra system resources shall be occupied. A good handover experience can not be guaranteed, and the efficiency of the system may be degraded, in either of the options.

### Summary

Embodiments of the application provide a method for transmitting data and related device so as to address the problem in the prior art that the allocated functions of the central node and the transmitting node while data are being transmitted can not guarantee a good handover experience, and the efficiency of the system may be degraded.

Particular technical solutions according to the embodiments of the application are as follows.

In a first aspect, an embodiment of the application provides a method for transmitting data, the method including:
recomposing, by a central node, Radio Link Control (RLC) Service Data Units (SDUs) into an RLC Protocol Data Unit (PDU); and
transmitting, by the central node, the RLC PDU to a transmitting node serving a UE, and recomposing and then transmitting, by the transmitting node, the RLC PDU according to a size of a scheduled transport block.

Optionally a header of the RLC PDU carries at least a Sequence Number (SN) indicating a transmission order of the RLC PDU.

Optionally recomposing, by the central node, the Radio Link Control (RLC) Service Data Units (SDUs) into the RLC Protocol Data Unit (PDU) includes:
concatenating, by the central node, at least two RLC SDUs in an order in which the RLC SDUs are received, and adding, by the central node, the header of the RLC PDU to data obtained as a result of concatenation, thus resulting in the RLC PDU; or
adding, by the central node, the header of the RLC PDU to a next RLC SDU being not recomposed, in an order in which the RLC SDUs are received, thus resulting in the RLC PDU.

Optionally the data obtained as a result of concatenation satisfy one of following conditions:
a quantity of bytes in the data obtained as a result of concatenation is above a preset threshold; or
a quantity of bytes in the data obtained as a result of concatenation is not above a preset threshold; or
the data obtained as a result of concatenation are consisted of a preset quantity of concatenated RLC SDUs.

Optionally the method further includes:
receiving, by the central node, information about a missing SN transmitted by the UE through the transmitting node, where the information about the missing SN carries information of the SN of an RLC PDU failing to be received by the UE; and
retransmitting, by the central node, the RLC PDU according to the information about the missing SN;
or,
receiving, by the central node, information about a missing SN transmitted by the UE through the transmitting node, where the information about the missing SN carries information of the SN of an RLC PDU failing to be received by the UE, and information about position of an RLC PDU segment in the RLC PDU; and
retransmitting, by the central node, the RLC PDU segment according to the information about the missing SN.

Optionally the method further includes:
if the central node determines that the transmitting node serving the UE is changed, then transmitting data to the changed transmitting node starting with the first RLC PDU being transmitted, or a first RLC PDU for which no Hybrid Automatic Repeated Request (HARQ) acknowledgement is received.

In a second aspect, an embodiment of the application provides a method for transmitting data, the method including:
receiving, by a transmitting node, Radio Link Control (RLC) Protocol Data Units (PDUs) transmitted by a central node; and
recomposing and then transmitting, by the transmitting node, the RLC PDUs according to the size of a scheduled transport block.

Optionally headers of the RLC PDUs carry at least Sequence Numbers (SNs); and
recomposing, by the transmitting node, the RLC PDUs according to the size of the scheduled transport block includes:
recomposing, by the transmitting node, the RLC PDUs as per the SNs of the RLC PDUs according to the size of the scheduled transport block.

Optionally recomposing, by the transmitting node, the RLC PDUs as per the SNs of the RLC PDUs according to the size of the scheduled transport block includes:
determining, by the transmitting node, the RLC PDUs to be recomposed, in an order of the SNs of the RLC PDUs, determining RLC SDUs and/or RLC SDU segments in each RLC PDU to be recomposed, and decomposing the determined RLC SDUs and/or RLC SDU segments into an MAC SDU, wherein a size of the MAC SDU is less than or equal to the size of the transport block.

Optionally a header of the MAC SDU includes information about the SN of each RLC PDU to be recomposed, and information about the RLC SDUs and/or the RLC SDU segments in each RLC PDU to be recomposed.

Optionally when the header of the MAC SDU includes the information about the SN of each RLC PDU to be recomposed, and the information about the RLC SDUs and/or the RLC SDU segments in each RLC PDU to be recomposed:
the header of the MAC SDU includes the SN of each RLC PDU to be recomposed, and a length indicator set corresponding to the SN of each RLC PDU, where the length indicator set includes a length indicator of each RLC SDU and/or RLC SDU segment belonging to the RLC PDU among the respective RLC SDUs and/or RLC SDU segments to be recomposed;
or,
the header of the MAC SDU includes the SN of a first RLC PDU to be recomposed, and a quantity of RLC SDUs and/or RLC SDU segments to be recomposed, and a length indicator of each RLC SDU and/or RLC SDU segment to be recomposed, in each RLC PDU to be recomposed;
or,
the header of the MAC SDU includes the SN of a first RLC PDU to be recomposed, and a length indicator of each RLC SDU and/or RLC SDU segment to be recomposed, in each RLC PDU to be recomposed, wherein total quantities of RLC SDUs and/or RLC SDU segments to be recomposed, in different RLC PDUs to be recomposed are same;
or,
the header of the MAC SDU includes the SN of a first RLC PDU to be recomposed, and a length indicator and an end indicator of each RLC SDU and/or RLC SDU segment to be recomposed, in each RLC PDU to be recomposed, wherein the end indicator indicates whether the RLC SDU and/or the RLC SDU segment is an end of the RLC PDU including the RLC SDU and/or the RLC SDU segment.

In a third aspect, an embodiment of the application provides a central node including:
a recomposing module configured to recompose Radio Link Control (RLC) Service Data Units (SDUs) into an RLC Protocol Data Unit (PDU); and
a transmitting module configured to transmit the RLC PDU to a transmitting node serving a UE, where the transmitting node recomposes and then transmits the RLC PDU according to a size of a scheduled transport block.

Optionally a header of the RLC PDU carries at least a Sequence Number (SN) indicating a transmission order of the RLC PDU.

Optionally the recomposing module is configured to:
concatenate at least two RLC SDUs in an order in which the RLC SDUs are received, and add the header of the RLC PDU to data obtained as a result of concatenation, thus resulting in the RLC PDU; or
add the header of the RLC PDU to the next RLC SDU being recomposed, in an order in which the RLC SDUs are received, thus resulting in the RLC PDU.

Optionally the data obtained as a result of concatenation satisfy one of following conditions:
a quantity of bytes in the data obtained as a result of concatenation is above a preset threshold; or
a quantity of bytes in the data obtained as a result of concatenation is not above a preset threshold; or
the data obtained as a result of concatenation are consisted of a preset quantity of concatenated RLC SDUs.

Optionally the transmitting module is further configured to:
receive information about a missing SN transmitted by the UE through the transmitting node, wherein the information about the missing SN carries information of the SN of an RLC PDU failing to be received by the UE; and retransmit the RLC PDU according to the information about the missing SN;
or,
receive information about a missing SN transmitted by the UE through the transmitting node, where the information about the missing SN carries information of the SN of an RLC PDU failing to be received by the UE, and information about position of an RLC PDU segment in the RLC PDU; and retransmit the RLC PDU segment according to the information about the missing SN.

Optionally the transmitting module is further configured to:
if it is determined that the transmitting node serving the UE is changed, transmit data to the changed transmitting node starting with a first RLC PDU being not transmitted, or a first RLC PDU for which no HARQ acknowledgement is received.

In a fourth aspect, an embodiment of the application provides a transmitting node including:
a receiving module configured to receive Radio Link Control (RLC) Protocol Data Units (PDUs) transmitted by a central node; and
a processing module configured to recompose and then transmit the RLC PDUs according to a size of a scheduled transport block.

Optionally headers of the RLC PDUs carry at least Sequence Numbers (SNs); and
the processing module is configured to:
recompose the RLC PDUs as per the SNs of the RLC PDUs according to the size of a scheduled transport block.

Optionally the processing module is configured to:
determine the RLC PDUs to be recomposed, in an order of the SNs of the RLC PDUs, determine RLC SDUs and/or RLC SDU segments in each RLC PDU to be recomposed, and decompose the determined RLC SDUs and/or RLC SDU segments into an MAC SDU, where a size of the MAC SDU is less than or equal to the size of the transport block.

Optionally a header of the MAC SDU includes information about the SN of each RLC PDU to be recomposed, and information about the RLC SDUs and/or the RLC SDU segments in each RLC PDU to be recomposed.

Optionally when the header of the MAC SDU includes the information about the SN of each RLC PDU to be recomposed, and the information about the RLC SDUs and/or the RLC SDU segments in each RLC PDU to be recomposed:
the header of the MAC SDU includes the SN of each RLC PDU to be recomposed, and a length indicator set corresponding to the SN of each RLC PDU, wherein the length indicator set includes a length indicator of each RLC SDU and/or RLC SDU segment belonging to the RLC PDU among the respective RLC SDUs and/or RLC SDU segments to be recomposed;
or,
the header of the MAC SDU includes the SN of a first RLC PDU to be recomposed, and a quantity of RLC SDUs and/or RLC SDU segments to be recomposed, and a length indicator of each RLC SDU and/or RLC SDU segment to be recomposed, in each RLC PDU to be recomposed;
or,
the header of the MAC SDU includes the SN of a first RLC PDU to be recomposed, and a length indicator of each RLC SDU and/or RLC SDU segment to be recomposed, in each RLC PDU to be recomposed, where total quantities of RLC SDUs and/or RLC SDU segments to be recomposed, in different RLC PDUs to be recomposed are same;
or,
the header of the MAC SDU includes the SN of a first RLC PDU to be recomposed, and a length indicator and an end indicator of each RLC SDU and/or RLC SDU segment to be recomposed, in each RLC PDU to be recomposed, where the end indicator indicates whether the RLC SDU and/or the RLC SDU segment is an end of the RLC PDU including the RLC SDU and/or the RLC SDU segment.

In a fifth aspect, an embodiment of the application provides a central node including: a processor, a memory, and a communication interface, where
the memory is configured to store preset programs, and the processor is configured to read the program in the memory to:
recompose Radio Link Control (RLC) Service Data Units (SDUs) into an RLC Protocol Data Unit (PDU); and
transmit the RLC PDU to a transmitting node serving a UE via the communication interface, where the transmitting node recomposes and then transmits the RLC PDU according to the size of a scheduled transport block.

Optionally a header of the RLC PDU carries at least a Sequence Number (SN) indicating a transmission order of the RLC PDU.

Optionally the processor is configured to:
concatenate at least two RLC SDUs in an order in which the RLC SDUs are received, and to add a header of the RLC PDU to data obtained as a result of concatenation, thus resulting in the RLC PDU; or
add a header of the RLC PDU to a next RLC SDU being not recomposed, in an order in which the RLC SDUs are received, thus resulting in the RLC PDU.

Optionally the data obtained as a result of concatenation satisfy one of following conditions:
a quantity of bytes in the data obtained as a result of concatenation is above a preset threshold; or
a quantity of bytes in the data obtained as a result of concatenation is not above a preset threshold; or
the data obtained as a result of concatenation are consisted of a preset quantity of concatenated RLC SDUs.

Optionally the processor is configured to:
receive information about a missing SN transmitted by the UE through the transmitting node via the communication interface, where the information about the missing SN carries information of the SN of an RLC PDU failing to be received by the UE; and retransmit the RLC PDU according to the information about the missing SN;
or,
receive information about a missing SN transmitted by the UE through the transmitting node via the communication interface, where the information about the missing SN carries information of the SN of an RLC PDU failing to be received by the UE, and information about position of an RLC PDU segment in the RLC PDU; and retransmit the RLC PDU segment according to the information about the missing SN.

Optionally the processor is further configured to:
if it is determined that the transmitting node serving the UE is changed, transmit data to the changed transmitting node via the communication interface starting with a first RLC PDU being not transmitted, or the first RLC PDU for which no HARQ acknowledgement is received.

In a sixth aspect, an embodiment of the application provides a transmitting node including: a processor, a memory, and a communication interface, where:
the memory is configured to store preset programs, and the processor is configured to read the programs in the memory to:
receive Radio Link Control (RLC) Protocol Data Units (PDUs) transmitted by a central node, via the communication interface; and
recompose and then transmit the RLC PDUs according to the size of a scheduled transport block.

Optionally headers of the RLC PDUs carry at least Sequence Numbers (SNs); and
the processor is configured to:
recompose the RLC PDUs according to the SNs of the RLC PDUs according to the size of a scheduled transport block.

Optionally the processor is configured to:
determine the RLC PDUs to be recomposed, in an order of the SNs of the RLC PDUs, determine RLC SDUs and/or RLC SDU segments in each RLC PDU to be recomposed, and decompose the determined RLC SDUs and/or RLC SDU segments into an MAC SDU, where a size of the MAC SDU is less than or equal to the size of the transport block.

Optionally a header of the MAC SDU includes information about the SN of each RLC PDU to be recomposed, and information about the RLC SDUs and/or the RLC SDU segments in each RLC PDU to be recomposed.

Optionally when the header of the MAC SDU includes the information about the SN of each RLC PDU to be recomposed, and information about the RLC SDUs and/or the RLC SDU segments in each RLC PDU to be recomposed:
the header of the MAC SDU includes the SN of each RLC PDU to be recomposed, and a length indicator set corresponding to the SN of each RLC PDU, where the length indicator set includes a length indicator of each RLC SDU and/or RLC SDU segment belonging to the RLC PDU among the respective RLC SDUs and/or RLC SDU segments to be recomposed;
or,
the header of the MAC SDU includes the SN of a first RLC PDU to be recomposed, and a quantity of RLC SDUs and/or RLC SDU segments to be recomposed, and a length indicator of each RLC SDU and/or RLC SDU segment to be recomposed, in each RLC PDU to be recomposed;
or,
the header of the MAC SDU includes the SN of a first RLC PDU to be recomposed, and a length indicator of each RLC SDU and/or RLC SDU segment to be recomposed, in each RLC PDU to be recomposed, wherein total quantities of RLC SDUs and/or RLC SDU segments to be recomposed, in different RLC PDUs to be recomposed are same;
or,
the header of the MAC SDU includes the SN of a first RLC PDU to be recomposed, and a length indicator and an end indicator of each RLC SDU and/or RLC SDU segment to be recomposed, in each RLC PDU to be recomposed, where the end indicator indicates whether the RLC SDU and/or the RLC SDU segment is an end of the RLC PDU including the RLC SDU and/or the RLC SDU segment.

With the technical solutions above, in the embodiments of the application, the central node recomposes the RLC SDUs into the RLC PDU at the RLC layer, and transmits the RLC PDU to the transmitting node serving the UE, and the transmitting node recomposes and then transmits the RLC PDU according to the size of the scheduled transport block at the RLC layer, so that a lot of data for downlink transmission can be stored in the central node, and the UE can be switched rapidly and efficiently between the transmitting nodes, thus improving the efficiency of the system, and guaranteeing a good handover experience.

### Brief Description of the Drawings

Fig. 1 is a schematic structural diagram of the user-plane protocol stack in the background of the application.
Fig. 2 is a schematic diagram of the dual-connectivity architecture in the background of the application.
Fig. 3 is a schematic diagram of the radio protocol architecture in the dual-connectivity scenario in the background of the application.
Fig.4a is a schematic diagram of recomposing a packet at the RLC layer in the background of the application.
Fig. 4b is a schematic diagram of recomposing a packet at the PDCP layer in the prior art.
Fig. 5 is a schematic architectural diagram of a system for transmitting data according to an embodiment of the application.
Fig. 6 is a schematic flow chart of transmitting data by a central node according to an embodiment of the application.
Fig. 7 is a schematic flow chart of transmitting data by a transmitting node according to an embodiment of the application.
Fig. 8 is a schematic structural diagram of a central node according to an embodiment of the application.
Fig. 9 is a schematic structural diagram of a transmitting node according to an embodiment of the application.
Fig. 10 is a schematic structural diagram of another central node according to an embodiment of the application.
Fig. 11 is a schematic structural diagram of another transmitting node according to an embodiment of the application.

### Detailed Description of the Embodiments

In order to make the objects, technical solutions, and advantages of the application more apparent, the application will be described below in further details with reference to the drawings, and apparently the embodiments to be described are only a part but not all of the embodiments of the application. Based upon the embodiments of the application, all the other embodiments which can occur to those ordinarily skilled in the art without any inventive effort shall fall into the claimed scope of the application.

A core idea of the application lies in that in order to transmit downlink data, the RLC layer is functionally divided into an RLC-High (RLC-H) layer, and an RLC-Low (RLC-L) layer, where the RLC-H layer is implemented at a central node, and the RLC-L layer is implemented at a transmitting node. The RLC-H layer of the central node is responsible for maintaining a state and buffering data, and the RLC-L layer of the transmitting node is responsible for recomposing data according to the size of a scheduled transport block.

The RLC-H layer of the central node concatenates RLC-SDUs from a PDCP layer into a data packet with a size determined according to scheduling by an MAC layer, and allocates a Sequence Number (SN) for the data packet into which the RLC-SDUs is concatenated.

The RLC-L layer of the transmitting node receives an RLC PDU from the RLC-H layer of the central node, and when a transmission occasion comes, the RLC-L layer segments and/or concatenates a data component of the RLC PDU and recomposes it into a new RLC PDU with the same SN as the original RLC PDU according to the size of a transport block scheduled by the MAC layer, and indicates the end of recomposing the RLC PDU.

The RLC-H layer of the central node is further responsible for maintaining all the state information, e.g., a transmission window, a reception window, a reordering timer, etc. A streaming mechanism is applied between the RLC-H layer of the central node, and the RLC-L layer of the transmitting node, and some transmission rate is maintained between the RLC-H layer of the central node, and the RLC-L layer of the transmitting node using the streaming mechanism, so that a lot of data to be transmitted are buffered at the RLC-H layer of the central node, and only some data are buffered at the RLC-L layer of the transmitting node.

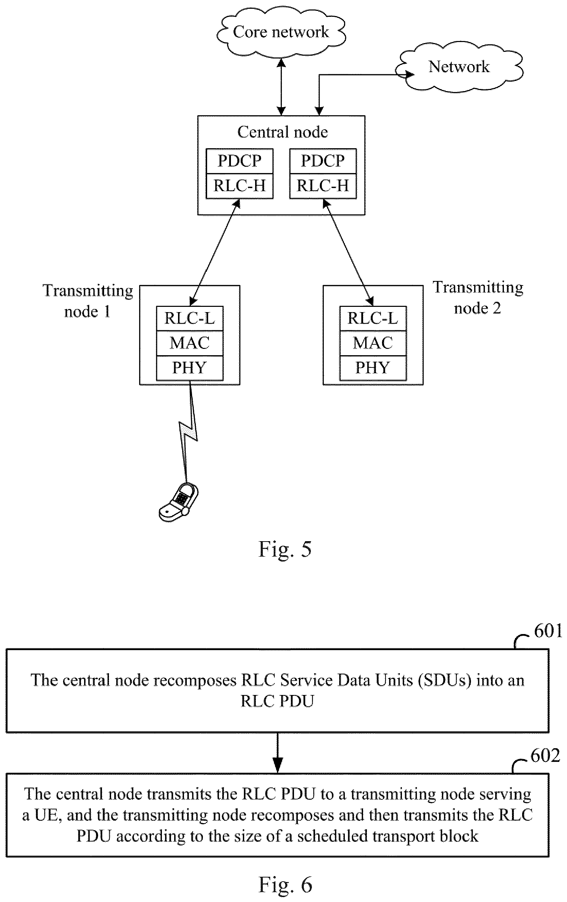

Fig. 5 illustrates a schematic architectural diagram of a system for transmitting data according to an embodiment of the application. At least one transmitting node is connected with a central node, where the central node is a node at a higher layer than the transmitting node, and the transmitting node transmits data directly with a UE via an air interface to support uplink and downlink data transmission of the UE.

For uplink data transmission, the UE transmits data to the transmitting node via the air interface; the transmitting node converges the data of the UE onto the central node; and the central node transmits the data of the UE uniformly to a core network or routes the data locally.

For downlink data transmission, after downlink data of the UE arrives at the central node, the central node processes the data at the PDCP layer and the RLC-H layer, and then transmits the processed data to the transmitting node. The data are transmitted between the central node and the transmitting node over an ideal backhaul connection or a non-ideal backhaul connection. After the downlink data of the UE arrives at the transmitting node, the downlink data are scheduled at the MAC layer of the transmitting node, and the scheduled downlink data are processed at the physical layer, and then transmitted to the UE.

The RLC layer of the central node is the RLC-H layer, and the RLC layer of the transmitting node is the RLC-L layer, in the following respective embodiments.

Based upon this idea, Fig. 6 illustrates a process of transmitting data by a central node according to an embodiment of the application particularly as follows.

Operation 601: the central node recomposes RLC Service Data Units (SDUs) into an RLC PDU at the RLC layer.

Here a header of the RLC PDU carries at least an SN indicating a transmission order of the RLC PDU.

In an implementation, the central node can recompose one or more RLC SDUs into an RLC PDU at the RLC layer. Particularly the central node concatenates at least two RLC SDUs at the RLC layer in an order in which the RLC SDUs are received, and adds a header of the RLC PDU to data obtained as a result of concatenation, thus resulting in the RLC PDU; or the central node adds at the RLC layer a header of the RLC PDU to the next RLC SDU, which is not recomposed, in an order in which the RLC SDUs are received, thus resulting in the RLC PDU.

Here the data obtained as a result of concatenation shall satisfy one of the following conditions.

Firstly the quantity of bytes in the data obtained as a result of concatenation is above a preset threshold.

For example, if the number of bytes in a data packet before the next RLC SDU is concatenated is below the preset threshold, and the number of bytes in a data packet after the next RLC SDU is concatenated is above the preset threshold, then no more RLC SDU will be further concatenated after the next RLC SDU is concatenated.

Secondly the quantity of bytes in the data obtained as a result of concatenation is not above a preset threshold.

For example, if the number of bytes in the current data packet obtained as a result of concatenation is not above the preset threshold, and the number of bytes in a data packet obtained after the next RLC SDU is further concatenated is above the preset threshold, then the next RLC SDU will be aborted from being concatenated.

Thirdly the data obtained as a result of concatenation are consisted of a preset quantity of concatenated RLC SDUs.

For example, N RLC SDUs with consecutive SNs are concatenated each time.

Here the header of the RLC PDU can further carry data packet type information, e.g., whether the data packet is a data packet or a state packet, an indicator of the length of each concatenated RLC SDU, a poll bit, etc.

Operation 602: the central node transmits the RLC PDU at the RLC layer to a transmitting node serving a UE, and the transmitting node recomposes and then transmits the RLC PDU at the RLC layer according to the size of a scheduled transport block.

In an implementation, the UE reorders the RLC PDUs in an order of the SNs of the RLC PDUs upon reception of the RLC PDUs at the RLC layer, and if there is an RLC PDU arranged out of order, then the UE will start a reordering timer to wait for HARQ retransmission; and after the reordering timer expires, the UE determines that the HARQ retransmission fails, and there is a loss of data with a missing SN, and composes a state report to feed a packet loss back to the central node, where the state report carries information about the missing SN.

The central node retransmits a data packet according to the packet loss fed back by the UE.

Particularly there are the following two implementations without any limitation thereto.

The first implementation: the central node receives at the RLC layer the information about the missing SN transmitted by the UE through the transmitting node, where the information about the missing SN carries information of the SN of the RLC PDU failing to be received by the UE; and the central node retransmits the RLC PDU at the RLC layer according to the information about the missing SN.

The second implementation: the central node receives at the RLC layer the information about the missing SN transmitted by the UE through the transmitting node, where the information about the missing SN carries information of the SN of the RLC PDU failing to be received by the UE, and information about the position of an RLC PDU segment in the RLC PDU; and the central node retransmits the RLC PDU segment at the RLC layer according to the information about the missing SN.

In an implementation, if the central node determines that the transmitting node serving the UE is changed, then the central node will transmit data to the changed transmitting node at the RLC layer starting with the first RLC PDU which is not transmitted, or the first RLC PDU for which no HARQ acknowledgement is received.

In an implementation, the RLC layer of the central node transits the RLC PDU to the transmitting node in a streaming mechanism between the RLC layer of the central node, and the RLC layer of the transmitting node. Particularly the central node transmits the RLC PDU to the transmitting node at the RLC layer according to the amount of currently buffered data, the amount of data to be buffered, etc., of the transmitting node so that there are a sufficient amount of data buffered in the transmitting node, and the amount of buffered data in the transmitting node is not above a threshold, where the amount of data to be buffered in the transmitting node can guarantee a high transmission rate via an air interface, but also avoid a large amount of data from being buffered in the transmitting node, to thereby avoid the data from being forwarded when the transmitting node is switched.

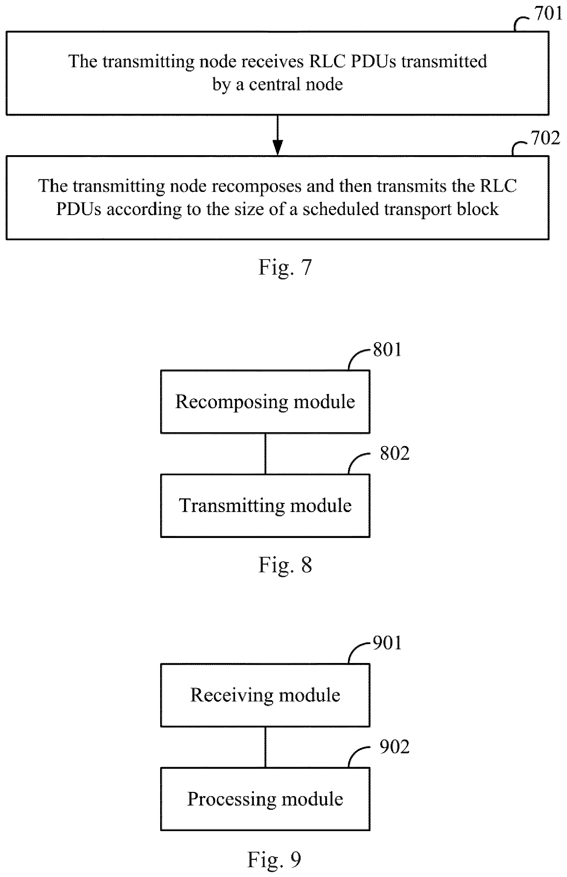

Based upon the same inventive idea, Fig. 7 illustrates a process of transmitting data by a transmitting node according to an embodiment of the application particularly as follows.

Operation 701: the transmitting node receives RLC PDUs transmitted by a central node, at the RLC layer.

Particularly the transmitting node stores the received RLC PDUs in a transmission buffer at the RLC layer in an order of SNs.

Here headers of the RLC PDUs carry at least the SNs.

Operation 702, the transmitting node recomposes and then transmits the RLC PDUs at the RLC layer according to the size of a scheduled transport block.

In an implementation, the transmitting node recomposes the RLC PDUs according to the SNs of the RLC PDUs at the RLC layer according to the size of a scheduled transport block. The size of an MAC SDU obtained as a result of recomposing is approximate to the size of a transport block to be scheduled as much as possible. Preferably the size of the MAC SDU obtained as a result of recomposing is equal to the size of the transport block to be scheduled.

Particularly the transmitting node determines the RLC PDUs to be recomposed, at the RLC layer in an order of the SNs of the RLC PDUs, determines RLC SDUs and/or RLC SDU segments in each RLC PDU to be recomposed, and decomposes the determined RLC SDUs and/or RLC SDU segments into the MAC SDU.

Here the size of the MAC SDU is less than or equal to the size of the transport block. Particularly the absolute value of the difference between the size of the MAC SDU, and the size of the transport block is less than a preset value.

In an implementation, a header of the MAC SDU includes information about the SN of each RLC PDU to be recomposed, and information about the RLC SDUs and/or the RLC SDU segments in each RLC PDU to be recomposed. Particularly the information can be carried in the following implementations without any limitation thereto.

First implementation: the header of the MAC SDU includes the SN of each RLC PDU to be recomposed, and a length indicator set corresponding to the SN of each RLC PDU, where the length indicator set includes a length indicator of each RLC SDU and/or RLC SDU segment belonging to the RLC PDU among the respective RLC SDUs and/or RLC SDU segments to be recomposed.

Second implementation: the header of the MAC SDU includes the SN of the first RLC PDU to be recomposed, and the quantity of RLC SDUs and/or RLC SDU segments to be recomposed, and a length indicator of each RLC SDU and/or RLC SDU segment to be recomposed, in each RLC PDU to be recomposed.

Third implementation: the header of the MAC SDU includes the SN of the first RLC PDU to be recomposed, and a length indicator of each RLC SDU and/or RLC SDU segment to be recomposed, in each RLC PDU to be recomposed, where the total quantities of RLC SDUs and/or RLC SDU segments to be recomposed, in different RLC PDUs to be recomposed are same.

Here the quantity of RLC SDUs and/or RLC SDU segments to be recomposed into the MAC SDU, in the RLC PDU can be configured at a higher layer, e.g., a Radio Resource Control (RRC) layer, and the configuration can be obtained in advance by the UE and the network side. In an application, different quantities of RLC SDUs and/or RLC SDU segments can be configured for different services or different UEs.

Fourth implementation: the header of the MAC SDU includes the SN of the first RLC PDU to be recomposed, and a length indicator and an end indicator of each RLC SDU and/or RLC SDU segment to be recomposed, in each RLC PDU to be recomposed, where the end indicator indicates whether the RLC SDU and/or the RLC SDU segment is the end of the RLC PDU including the RLC SDU and/or the RLC SDU segment.

Particularly the MAC layer of the transmitting node notifies the RLC layer of the transmitting node of the size of the transport block to be scheduled. The RLC layer of the transmitting node proceeds according to the relationship between the size of a scheduled transport block, and the size of an RLC PDU in the following implementations.

First implementation: the transmitting node determines at the RLC layer that the size of a scheduled transport block is more than the size of an RLC PDU, and it can determine this particularly by comparing their numbers of bytes. The RLC layer of the transmitting node concatenates RLC SDUs and/or RLC SDU segments in a plurality of RLC PDUs with consecutive SNs sequentially into a new MAC SDU in an order of SNs. The new MAC SDU has a uniform structure of a header, and the header includes information about an SN of an RLC PDU including each RLC SDU and/or RLC SDU segment composing the MAC SDU, a length indicator of each RLC SDU and/or RLC SDU segment, and an indicator whether it is an RLC SDU segment.

In a first representation pattern, the header of the MAC SDU enumerates the SN of each RLC PDU to be composed into the MAC SDU, and a Length Indicator (LI) of each RLC SDU or RLC SDU segment in the RLC PDU with the SN in the MAC SDU. For example, the header of the MAC SDU includes SN1, LI1, LI2, SN2, LI3, LI4, and LI5.

In a second representation pattern, since the SNs of the respective RLC PDUs to be composed into the MAC SDU are consecutive, e.g., m, m+1, m+2, etc., the header of the MAC SDU can include the SN of the first RLC PDU to be composed into the MAC PDU, the quantities of RLC SDUs and/or RLC SDU segments in the respective RLC PDUs in the MAC SDU, and a length indicator of each RLC SDU and/or RLC SDU segment. For example, a field including that quantity can occupy two or three bits, and if it occupies two bits, then it may indicate at most four SDUs and/or SDU segments; and if it occupies three bytes, it may indicate at most eight SDUs and/or SDU segments. Table 1 depicts a representation pattern in two bits, and Table 2 depicts a representation pattern in three bits.

**Table 1**

| 2 bits | Definition |
|---|---|
| 00 | Represent one SDU |
| 01 | Represent two consecutive SDUs |
| 10 | Represent three consecutive SDUs |
| 11 | Represent four consecutive SDUs |

**Table 2**

| 3 bits | Definition |
|---|---|
| 000 | Represent one SDU |
| 001 | Represent two consecutive SDUs |
| 010 | Represent three consecutive SDUs |
| 011 | Represent four consecutive SDUs |
| 100 | Represent five consecutive SDUs |
| 101 | Represent six consecutive SDUs |
| 110 | Represent seven consecutive SDUs |
| 111 | Represent eight consecutive SDUs |

In a third representation pattern, given the same and fixed quantity of RLC SDUs in each RLC PDU, where, for example, M RLC SDUs are concatenated into an RLC PDU, the header of the MAC SDU can include the SN of the first RLC PDU to be composed into the MAC SDU, and the other RLC PDUs can be derived, that is, each RLC PDU can be recovered under the condition that M complete RLC SDUs are concatenated into an RLC PDU. For example, the header of the MAC SDU includes LI1, SN, LI2, LI3, LI4, LI5, LI6, and LI7, and since each complete RLC PDU includes three RLC SDUs, it can be determined that an RLC SDU or an RLC SDU segment corresponding to LI1 belongs to an RPC PDU with a sequence number of SN, RLC SDUs corresponding to LI2, LI3, and LI4 belong to an RLC PDU with a sequence number of SN+1, and RLC SDUs corresponding to LI5, LI6, and LI7 belong to an RLC PDU with a sequence number of SN+2.

In a fourth representation pattern, the header of the MAC SDU can include the SN of the first RLC PDU to be composed into the MAC SDU, and a length indicator of each RLC SDU or RLC SDU segment, and one additional bit is occupied in the length indicator of each RLC SDU or RLC SDU segment, where the one additional bit indicates whether the RLC SDU or the RLC SDU segment is the end of an RLC PDU, to thereby distinguish different RLC PDUs.

Second implementation: the transmitting node determines at the RLC layer that the size of a scheduled transport block is less than the size of an RLC PDU. The transmitting node recomposes a part of SDUs and/or SDU segments in an RLC PDU into a new MAC SDU at the RLC layer. A header of the new MAC SDU includes the SN of the RLC PDU, and a length indicator and position information of each RLC SDU or RLC SDU segment.

Here when the MSC SDU includes an incomplete RLC PDU, the header of the MAC SDU further carries information about the position of the incomplete RLC PDU in the entire RLC PDU including the incomplete RLC PDU. For example, the position information indicates 0-x bytes or x-y bytes or y-end bytes in the corresponding RLC PDU including the incomplete RLC PDU. This pattern is advantageous in the Acknowledgement Mode (AM), and an AM receiver making an automatic repeated request replies with a state report and retransmission, so that the data packet can be recomposed and delivered in order.

In an implementation, the transmitting node transmits the MAC SDU to the MAC layer at the RLC layer, and the MAC layer transmits it via an air interface through the PHY layer.

It shall be noted that the RLC PDU, the RLC state report, and the retransmitted packet of the RLC PDU are transmitted separately to the MAC layer to be recomposed into different MAC SDUs.

In an implementation, transmission information can be passed between the RLC layer of the central node, and the RLC layer of the transmitting node. The transmission information includes RLC PDUs which have been transmitted, RLC PDUs for which HARQ feedback has been obtained, etc.

In an implementation, the central node maintains a state of transmitting side at the RLC layer, and particularly a state variable of the transmitting side, a transmitting window, a timer, etc., at the RLC layer during downlink transmission. Particularly the central node transmits an RLC PDU at the RLC layer, and if the SN of the RLC PDU is VT(s), and the value of the state variable of the transmitting side is VT(s), then the value of the state variable of the transmitting side will be increased by one after the RLC PDU is transmitted. The central node records the SN of the next RLC PDU for which an opposite RLC layer confirms correct reception, in VT(A) at the RLC layer, and updates VT(A) according to a state report of a receiver. An upper boundary of the transmitting window is VT(A), and a lower boundary of the transmitting window is the sum of VT(A) and the size of the window.

In an implementation, the central node further maintains a state of the receiving side at the PLC layer, and particularly a state variable of the receiving side, a receiving window, a timer, etc., at the RLC layer during uplink transmission. Data of the state of the receiving side will not be migrated when the transmitting node of the UE is changed.

The RLC-H and the RLC-L are regarded as the same entity instead of being distinguished from each other during uplink transmission.

In a specific implementation, if the UE moves out of a service area of the current transmitting node, then the transmitting node of the UE will be switched, that is, the UE will be handed from the original transmitting node over to a destination transmitting node to further serve the UE. The central node instructs the original transmitting node to stop serving the UE, and instructs the destination transmitting node to start serving the UE. Here in order to guarantee a continuous experience of the UE, there are the following several implementations.

First implementation: the original transmitting node is reset directly, and the destination transmitting node starts serving the UE from an initial state.

Second implementation: the original transmitting node transmits information about the UE at the RLC layer and MAC layer to the destination transmitting node so that the destination transmitting node can serve the UE continuously.

Third implementation: the original transmitting node continues on pending transmission, and the destination transmitting node starts serving the UE from an initial state at the end of the transmission by the original transmitting node.'

Based upon the same inventive idea, an embodiment of the application provides a central node, and reference can be made to the related description in the method embodiment above for a specific implementation of the central node, so a repeated description thereof will be omitted here. As illustrated in Fig. 8, the central node generally includes: a recomposing module 801 configured to recompose Radio Link Control (RLC) Service Data Units (SDUs) into an RLC Protocol Data Unit (PDU) at the RLC layer; and a transmitting module 802 configured to transmit the RLC PDU at the RLC layer to a transmitting node serving a UE, so that the transmitting node recomposes and then transmits the RLC PDU at the RLC layer according to the size of a scheduled transport block.

Optionally a header of the RLC PDU carries at least an SN indicating a transmission order of the RLC PDU.

Optionally the recomposing module 801 is configured: to concatenate at least two RLC SDUs at the RLC layer in an order in which the RLC SDUs are received, and to add a header of the RLC PDU to data obtained as a result of concatenation, thus resulting in the RLC PDU; or to add at the RLC layer a header of the RLC PDU to the next RLC SDU being not recomposed, in an order in which the RLC SDUs are received, thus resulting in the RLC PDU.

Optionally the data obtained as a result of concatenation satisfy one of the following conditions: the quantity of bytes in the data obtained as a result of concatenation is above a preset threshold; or the quantity of bytes in the data obtained as a result of concatenation is not above a preset threshold; or the data obtained as a result of concatenation are consisted of a preset quantity of concatenated RLC SDUs.

Optionally the transmitting module 802 is further configured: to receive at the RLC layer information about a missing SN transmitted by the UE through the transmitting node, where the information about the missing SN carries information of the SN of an RLC PDU failing to be received by the UE; and to retransmit the RLC PDU at the RLC layer according to the information about the missing SN; or, to receive at the RLC layer information about a missing SN transmitted by the UE through the transmitting node, where the information about the missing SN carries information of the SN of an RLC PDU failing to be received by the UE, and information about the position of an RLC PDU segment in the RLC PDU; and to retransmit the RLC PDU segment at the RLC layer according to the information about the missing SN.

Optionally the transmitting module 802 is further configured: if it is determined that the transmitting node serving the UE is changed, to transmit data to the changed transmitting node at the RLC layer starting with the first RLC PDU being not transmitted, or the first RLC PDU for which no HARQ acknowledgement is received.

Based upon the same inventive idea, an embodiment of the application further provides a transmitting node, and reference can be made to the related description of the method embodiment above for a specific implementation of the transmitting node, so a repeated description thereof will be omitted here. As illustrated in Fig. 9, the transmitting node generally includes: a receiving module 901 configured to receive RLC PDUs transmitted by a central node, at the RLC layer; and a processing module 902 configured to recompose and then transmit the RLC PDUs at the RLC layer according to the size of a scheduled transport block.

Optionally headers of the RLC PDUs carry at least Sequence Numbers (SNs); and the processing module 902 is configured: to recompose the RLC PDUs according to the SNs of the RLC PDUs at the RLC layer according to the size of a scheduled transport block.

Optionally the processing module 902 is configured: to determine the RLC PDUs to be recomposed, at the RLC layer in an order of the SNs of the RLC PDUs, to determine RLC SDUs and/or RLC SDU segments in each RLC PDU to be recomposed, and to decompose the determined RLC SDUs and/or RLC SDU segments into an MAC SDU, where the size of the MAC SDU is less than or equal to the size of the transport block.

Optionally a header of the MAC SDU includes information about the SN of each RLC PDU to be recomposed, and information about the RLC SDUs and/or the RLC SDU segments in each RLC PDU to be recomposed.

Optionally when the header of the MAC SDU includes the information about the SN of each RLC PDU to be recomposed, and the information about the RLC SDUs and/or the RLC SDU segments in each RLC PDU to be recomposed: the header of the MAC SDU includes the SN of each RLC PDU to be recomposed, and a length indicator set corresponding to the SN of each RLC PDU, where the length indicator set includes a length indicator of each RLC SDU and/or RLC SDU segment belonging to the RLC PDU among the respective RLC SDUs and/or RLC SDU segments to be recomposed; or, the header of the MAC SDU includes the SN of the first RLC PDU to be recomposed, and the quantity of RLC SDUs and/or RLC SDU segments to be recomposed, and a length indicator of each RLC SDU and/or RLC SDU segment to be recomposed, in each RLC PDU to be recomposed; or, the header of the MAC SDU includes the SN of the first RLC PDU to be recomposed, and a length indicator of each RLC SDU and/or RLC SDU segment to be recomposed, in each RLC PDU to be recomposed, where total quantities of RLC SDUs and/or RLC SDU segments to be recomposed, in different RLC PDUs to be recomposed are same; or, the header of the MAC SDU includes the SN of the first RLC PDU to be recomposed, and a length indicator and an end indicator of each RLC SDU and/or RLC SDU segment to be recomposed, in each RLC PDU to be recomposed, where the end indicator indicates whether the RLC SDU and/or the RLC SDU segment is the end of the RLC PDU including the RLC SDU and/or the RLC SDU segment.

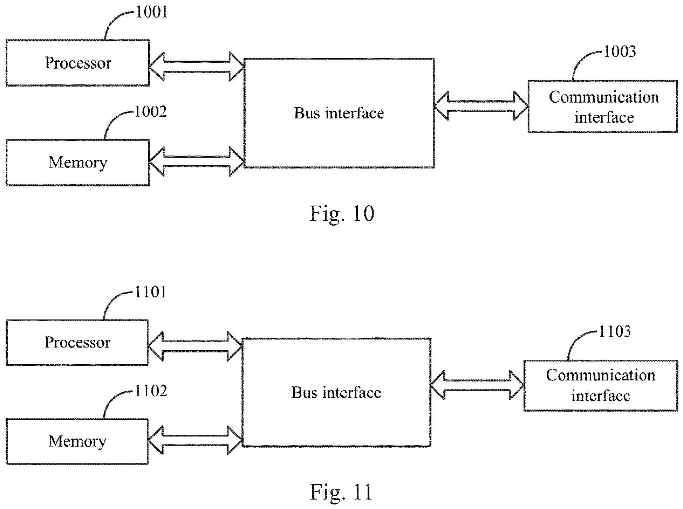

Based upon the same inventive idea, an embodiment of the application further provides a central node, and reference can be made to the related description in the method embodiment above for a particular implementation of the central node, so a repeated description thereof will be omitted here. As illustrated in Fig. 10, the central node generally includes a processor 1001, a memory 1002, and a communication interface 1003, where the memory 1002 is configured to store preset programs, and the processor 1001 is configured to read and execute the programs in the memory to: recompose RLC SDUs into an RLC PDU at the RLC layer; and transmit the RLC PDU at the RLC layer to a transmitting node serving a UE via the communication interface 1003, so that the transmitting node recomposes and then transmits the RLC PDU at the RLC layer according to the size of a scheduled transport block.

Optionally a header of the RLC PDU carries at least an SN indicating a transmission order of the RLC PDU.

Optionally the processor 1001 is configured: to concatenate at least two RLC SDUs at the RLC layer in an order in which the RLC SDUs are received, and to add a header of the RLC PDU to data obtained as a result of concatenation, thus resulting in the RLC PDU; or to add at the RLC layer a header of the RLC PDU to the next RLC SDU being not recomposed, in an order in which the RLC SDUs are received, thus resulting in the RLC PDU.

Optionally the data obtained as a result of concatenation satisfy one of the following conditions: the quantity of bytes in the data obtained as a result of concatenation is above a preset threshold; or the quantity of bytes in the data obtained as a result of concatenation is not above a preset threshold; or the data obtained as a result of concatenation are consisted of a preset quantity of concatenated RLC SDUs.

Optionally the processor 1001 is further configured: to receive at the RLC layer information about a missing SN transmitted by the UE through the transmitting node via the communication interface 1003, where the information about the missing SN carries information of the SN of an RLC PDU failing to be received by the UE; and to retransmit the RLC PDU at the RLC layer according to the information about the missing SN; or, to receive at the RLC layer information about a missing SN transmitted by the UE through the transmitting node via the communication interface 1003, where the information about the missing SN carries information of the SN of an RLC PDU failing to be received by the UE, and information about the position of an RLC PDU segment in the RLC PDU; and to retransmit the RLC PDU segment at the RLC layer according to the information about the missing SN.

Optionally the processor 1001 is further configured: if it is determined that the transmitting node serving the UE is changed, to transmit data to the changed transmitting node via the communication interface 1003 at the RLC layer starting with the first RLC PDU being not transmitted, or the first RLC PDU for which no HARQ acknowledgement is received.

Here the processor, the memory, and the communication interface are connected with each other via a bus, and the bus architecture can include any number of interconnecting buses and bridges to link together various circuits of one or more processors represented by the processor, and one or more memories represented by the memory. The bus architecture can further link together various other circuits, e.g., a peripheral device, a manostat, a power management circuit, etc., and all of these are well known in the art, so a detailed description thereof will be omitted here. A bus interface serves as an interface. The processor is responsible for managing the bus architecture and normal processes, and the memory can store data to be used by the processor while performing the operations.

Based upon the same inventive idea, an embodiment of the application further provides a transmitting node, and reference can be made to the related description in the method embodiment above for a specific implementation of the transmitting node, so a repeated description thereof will be omitted here. As illustrated in Fig. 11, the transmitting node generally includes a processor 1101, a memory 1102, and a communication interface 1103, where the memory 1102 is configured to store programs, and the processor 1101 is configured to read and execute the programs in the memory to: receive RLC PDUs transmitted by a central node, at the RLC layer via the communication interface 1103; and recompose and then transmit the RLC PDUs at the RLC layer via the communication interface according to the size of a scheduled transport block.

Optionally headers of the RLC PDUs carry at least SNs; and the processor 1101 is configured: to recompose the RLC PDUs according to the SNs of the RLC PDUs at the RLC layer according to the size of a scheduled transport block.

Optionally the processor 1101 is configured: to determine the RLC PDUs to be recomposed, at the RLC layer in an order of the SNs of the RLC PDUs, to determine RLC SDUs and/or RLC SDU segments in each RLC PDU to be recomposed, and to decompose the determined RLC SDUs and/or RLC SDU segments into an MAC SDU, where the size of the MAC SDU is less than or equal to the size of the transport block.

Optionally a header of the MAC SDU includes information about the SN of each RLC PDU to be recomposed, and information about the RLC SDUs and/or the RLC SDU segments in each RLC PDU to be recomposed.

Optionally when the header of the MAC SDU includes the information about the SN of each RLC PDU to be recomposed, and the information about the RLC SDUs and/or the RLC SDU segments in each RLC PDU to be recomposed: the header of the MAC SDU includes the SN of each RLC PDU to be recomposed, and a length indicator set corresponding to the SN of each RLC PDU, where the length indicator set includes a length indicator of each RLC SDU and/or RLC SDU segment belonging to the RLC PDU among the respective RLC SDUs and/or RLC SDU segments to be recomposed; or, the header of the MAC SDU includes the SN of the first RLC PDU to be recomposed, and the quantity of RLC SDUs and/or RLC SDU segments to be recomposed, and a length indicator of each RLC SDU and/or RLC SDU segment to be recomposed, in each RLC PDU to be recomposed; or, the header of the MAC SDU includes the SN of the first RLC PDU to be recomposed, and a length indicator of each RLC SDU and/or RLC SDU segment to be recomposed, in each RLC PDU to be recomposed, where total quantities of RLC SDUs and/or RLC SDU segments to be recomposed, in different RLC PDUs to be recomposed are same; or, the header of the MAC SDU includes the SN of the first RLC PDU to be recomposed, and a length indicator and an end indicator of each RLC SDU and/or RLC SDU segment to be recomposed, in each RLC PDU to be recomposed, where the end indicator indicates whether the RLC SDU and/or the RLC SDU segment is the end of the RLC PDU including the RLC SDU and/or the RLC SDU segment.

Here the processor, the memory, and the communication interface are connected with each other via a bus, and the bus architecture can include any number of interconnecting buses and bridges to link together various circuits of one or more processors represented by the processor, and one or more memories represented by the memory. The bus architecture can further link together various other circuits, e.g., a peripheral device, a manostat, a power management circuit, etc., and all of these are well known in the art, so a repeated description thereof will be omitted here. A bus interface serves as an interface. The processor is responsible for managing the bus architecture and normal processes, and the memory can store data to be used by the processor while performing the operations.

With the technical solutions above, in the embodiments of the application, the central node recomposes the RLC SDUs into the RLC PDU at the RLC layer, and transmits the RLC PDU to the transmitting node serving the UE, and the transmitting node recomposes and then transmits the RLC PDU according to the size of the scheduled transport block at the RLC layer, so that a lot of data for downlink transmission can be stored in the central node, and the UE can be switched rapidly and efficiently between the transmitting nodes, thus improving the efficiency of the system, and guaranteeing a good handover experience.

Those skilled in the art shall appreciate that the embodiments of the application can be embodied as a method, a system or a computer program product. Therefore the application can be embodied in the form of an all-hardware embodiment, an all-software embodiment or an embodiment of software and hardware in combination. Furthermore the application can be embodied in the form of a computer program product embodied in one or more computer useable storage mediums (including but not limited to a disk memory, an optical memory, etc.) in which computer useable program codes are contained.

The application has been described in a flow chart and/or a block diagram of the method, the device (system) and the computer program product according to the embodiments of the application. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the application without departing from the spirit and scope of the application. Thus the application is also intended to encompass these modifications and variations thereto so long as the modifications and variations come into the scope of the claims appended to the application and their equivalents.

## Claims

1. A method for transmitting data, the method comprising:
recomposing, by a central node, Radio Link Control, RLC, Service Data Units, SDUs, into an RLC Protocol Data Unit, PDU; and
transmitting, by the central node, the RLC PDU to a transmitting node serving a UE, and recomposing and then transmitting, by the transmitting node, the RLC PDU at the RLC layer according to a size of a scheduled transport block.

2. The method according to claim 1, wherein a header of the RLC PDU carries at least a Sequence Number, SN, indicating a transmission order of the RLC PDU.

3. The method according to claim 2, wherein recomposing, by the central node, the RLC SDUs into the RLC PDU comprises:
concatenating, by the central node, at least two RLC SDUs in an order in which the RLC SDUs are received, and adding, by the central node, the header of the RLC PDU to data obtained as a result of concatenation, thus resulting in the RLC PDU; or
adding, by the central node, the header of the RLC PDU to a next RLC SDU being not recomposed, in an order in which the RLC SDUs are received, thus resulting in the RLC PDU.

4. The method according to claim 3, wherein the data obtained as a result of concatenation satisfy one of following conditions:
a quantity of bytes in the data obtained as a result of concatenation is above a preset threshold; or
a quantity of bytes in the data obtained as a result of concatenation is not above a preset threshold; or
the data obtained as a result of concatenation are consisted of a preset quantity of concatenated RLC SDUs.

5. The method according to any one of claims 1 to 4, wherein the method further comprises:
receiving, by the central node, information about a missing SN transmitted by the UE through the transmitting node, wherein the information about the missing SN carries information of the SN of an RLC PDU failing to be received by the UE; and
retransmitting, by the central node, the RLC PDU according to the information about the missing SN;
or,
receiving, by the central node, information about a missing SN transmitted by the UE through the transmitting node, wherein the information about the missing SN carries information of the SN of an RLC PDU failing to be received by the UE, and information about position of an RLC PDU segment in the RLC PDU; and
retransmitting, by the central node, the RLC PDU segment at the RLC layer according to the information about the missing SN.

6. The method according to any one of claims 1 to 4, wherein the method further comprises:
if the central node determines that the transmitting node serving the UE is changed, then transmitting data to the changed transmitting node starting with a first RLC PDU being not transmitted, or a first RLC PDU for which no Hybrid Automatic Repeated Request (HARQ) acknowledgement is received.

7. A method for transmitting data, the method comprising:
receiving, by a transmitting node, Radio Link Control, RLC, Protocol Data Units, PDUs, transmitted by a central node; and
recomposing and then transmitting, by the transmitting node, the RLC PDUs according to a size of a scheduled transport block.

8. The method according to claim 7, wherein headers of the RLC PDUs carry at least Sequence Numbers, SNs; and
recomposing, by the transmitting node, the RLC PDUs according to the size of the scheduled transport block comprises:
recomposing, by the transmitting node, the RLC PDUs as per the SNs of the RLC PDUs according to the size of the scheduled transport block.

9. The method according to claim 8, wherein recomposing, by the transmitting node, the RLC PDUs as per the SNs of the RLC PDUs according to the size of the scheduled transport block comprises:
determining, by the transmitting node, the RLC PDUs to be recomposed, in an order of the SNs of the RLC PDUs, determining RLC SDUs and/or RLC SDU segments in each RLC PDU to be recomposed, and decomposing the determined RLC SDUs and/or RLC SDU segments into an MAC SDU, wherein a size of the MAC SDU is less than or equal to the size of the transport block.

10. The method according to claim 9, wherein a header of the MAC SDU comprises information about the SN of each RLC PDU to be recomposed, and information about the RLC SDUs and/or the RLC SDU segments in each RLC PDU to be recomposed.

11. The method according to claim 10, wherein when the header of the MAC SDU comprises the information about the SN of each RLC PDU to be recomposed, and the information about the RLC SDUs and/or the RLC SDU segments in each RLC PDU to be recomposed:
the header of the MAC SDU comprises the SN of each RLC PDU to be recomposed, and a length indicator set corresponding to the SN of each RLC PDU, wherein the length indicator set comprises a length indicator of each RLC SDU and/or RLC SDU segment belonging to the RLC PDU among the respective RLC SDUs and/or RLC SDU segments to be recomposed;
or
the header of the MAC SDU comprises the SN of a first RLC PDU to be recomposed, and a quantity of RLC SDUs and/or RLC SDU segments to be recomposed, and a length indicator of each RLC SDU and/or RLC SDU segment to be recomposed, in each RLC PDU to be recomposed;
or,
the header of the MAC SDU comprises the SN of a first RLC PDU to be recomposed, and a length indicator of each RLC SDU and/or RLC SDU segment to be recomposed, in each RLC PDU to be recomposed, wherein total quantities of RLC SDUs and/or RLC SDU segments to be recomposed, in different RLC PDUs to be recomposed are same;
or,
the header of the MAC SDU comprises the SN of a first RLC PDU to be recomposed, and a length indicator and an end indicator of each RLC SDU and/or RLC SDU segment to be recomposed, in each RLC PDU to be recomposed, wherein the end indicator indicates whether the RLC SDU and/or the RLC SDU segment is an end of the RLC PDU comprising the RLC SDU and/or the RLC SDU segment.

12. A central node, comprising:
a recomposing module configured to recompose Radio Link Control, RLC, Service Data Units, SDUs, into an RLC Protocol Data Unit, PDU; and
a transmitting module configured to transmit the RLC PDU to a transmitting node serving a UE, wherein the transmitting node recomposes and then transmits the RLC PDU according to a size of a scheduled transport block.

13. The central node according to claim 12, wherein a header of the RLC PDU carries at least a Sequence Number, SN, indicating a transmission order of the RLC PDU.

14. The central node according to claim 13, wherein the recomposing module is configured to:
concatenate at least two RLC SDUs in an order in which the RLC SDUs are received, and add the header of the RLC PDU to data obtained as a result of concatenation, thus resulting in the RLC PDU; or
add the header of the RLC PDU to a next RLC SDU being not recomposed, in an order in which the RLC SDUs are received, thus resulting in the RLC PDU.

15. The central node according to claim 14, wherein the data obtained as a result of concatenation satisfy one of following conditions:
a quantity of bytes in the data obtained as a result of concatenation is above a preset threshold; or
a quantity of bytes in the data obtained as a result of concatenation is not above a preset threshold; or
the data obtained as a result of concatenation are consisted of a preset quantity of concatenated RLC SDUs.

16. The central node according to any one of claims 12 to 15, wherein the transmitting module is further configured to:
receive information about a missing SN transmitted by the UE through the transmitting node, wherein the information about the missing SN carries information of the SN of an RLC PDU failing to be received by the UE; and retransmit the RLC PDU according to the information about the missing SN;
or,
receive information about a missing SN transmitted by the UE through the transmitting node, wherein the information about the missing SN carries information of the SN of an RLC PDU failing to be received by the UE, and information about position of an RLC PDU segment in the RLC PDU; and retransmit the RLC PDU segment according to the information about the missing SN.

17. The central node according to any one of claims 12 to 15, wherein the transmitting module is further configured to:
if it is determined that the transmitting node serving the UE is changed, transmit data to the changed transmitting node starting with a first RLC PDU being not transmitted, or a first RLC PDU for which no HARQ acknowledgement is received.

18. A transmitting node, comprising:
a receiving module configured to receive Radio Link Control, RLC, Protocol Data Units, PDUs, transmitted by a central node; and
a processing module configured to recompose and then transmit the RLC PDUs according to a size of a scheduled transport block.

19. The transmitting node according to claim 18, wherein headers of the RLC PDUs carry at least Sequence Numbers, SNs; and
the processing module is configured to:
recompose the RLC PDUs as per the SNs of the RLC PDUs according to the size of a scheduled transport block.

20. The transmitting node according to claim 19, wherein the processing module is configured to:
determine the RLC PDUs to be recomposed, in an order of the SNs of the RLC PDUs, determine RLC SDUs and/or RLC SDU segments in each RLC PDU to be recomposed, and decompose the determined RLC SDUs and/or RLC SDU segments into an MAC SDU, wherein a size of the MAC SDU is less than or equal to the size of the transport block.

21. The transmitting node according to claim 20, wherein a header of the MAC SDU comprises information about the SN of each RLC PDU to be recomposed, and information about the RLC SDUs and/or the RLC SDU segments in each RLC PDU to be recomposed.

22. The transmitting node according to claim 21, wherein when the header of the MAC SDU comprises the information about the SN of each RLC PDU to be recomposed, and the information about the RLC SDUs and/or the RLC SDU segments in each RLC PDU to be recomposed:
the header of the MAC SDU comprises the SN of each RLC PDU to be recomposed, and a length indicator set corresponding to the SN of each RLC PDU, where the length indicator set comprises a length indicator of each RLC SDU and/or RLC SDU segment belonging to the RLC PDU among the respective RLC SDUs and/or RLC SDU segments to be recomposed;
or,
the header of the MAC SDU comprises the SN of a first RLC PDU to be recomposed, and a quantity of RLC SDUs and/or RLC SDU segments to be recomposed, and a length indicator of each RLC SDU and/or RLC SDU segment to be recomposed, in each RLC PDU to be recomposed;
or,
the header of the MAC SDU comprises the SN of a first RLC PDU to be recomposed, and a length indicator of each RLC SDU and/or RLC SDU segment to be recomposed, in each RLC PDU to be recomposed, wherein total quantities of RLC SDUs and/or RLC SDU segments to be recomposed, in different RLC PDUs to be recomposed are same;
or,
the header of the MAC SDU comprises the SN of a first RLC PDU to be recomposed, and a length indicator and an end indicator of each RLC SDU and/or RLC SDU segment to be recomposed, in each RLC PDU to be recomposed, wherein the end indicator indicates whether the RLC SDU and/or the RLC SDU segment is an end of the RLC PDU comprising the RLC SDU and/or the RLC SDU segment.

23. A central node, comprising: a processor, a memory, and a communication interface, wherein:
the memory is configured to store preset programs, and the processor is configured to read and execute the programs in the memory to:
recompose Radio Link Control, RLC, Service Data Units, SDUs, into an RLC Protocol Data Unit, PDU; and
transmit the RLC PDU to a transmitting node serving a UE via the communication interface, wherein the transmitting node recomposes and then transmits the RLC PDU according to a size of a scheduled transport block.

24. The central node according to claim 23, wherein a header of the RLC PDU carries at least a Sequence Number, SN, indicating a transmission order of the RLC PDU.

25. The central node according to claim 24, wherein the processor is configured to:
concatenate at least two RLC SDUs in an order in which the RLC SDUs are received, and add a header of the RLC PDU to data obtained as a result of concatenation, thus resulting in the RLC PDU; or
add a header of the RLC PDU to a next RLC SDU being not recomposed, in an order in which the RLC SDUs are received, thus resulting in the RLC PDU.

26. The central node according to claim 25, wherein the data obtained as a result of concatenation satisfy one of following conditions:
a quantity of bytes in the data obtained as a result of concatenation is above a preset threshold; or
a quantity of bytes in the data obtained as a result of concatenation is not above a preset threshold; or
the data obtained as a result of concatenation are consisted of a preset quantity of concatenated RLC SDUs.

27. The central node according to any one of claims 23 to 26, wherein the processor is configured to:
receive information about a missing SN transmitted by the UE through the transmitting node via the communication interface, wherein the information about the missing SN carries information of the SN of an RLC PDU failing to be received by the UE; and retransmit the RLC PDU according to the information about the missing SN;
or
receive information about a missing SN transmitted by the UE through the transmitting node via the communication interface, wherein the information about the missing SN carries information of the SN of an RLC PDU failing to be received by the UE, and information about position of an RLC PDU segment in the RLC PDU; and retransmit the RLC PDU segment according to the information about the missing SN.

28. The central node according to any one of claims 23 to 26, wherein the processor is further configured to:
if it is determined that the transmitting node serving the UE is changed, transmit data to the changed transmitting node via the communication interface starting with a first RLC PDU being not transmitted, or a first RLC PDU for which no HARQ acknowledgement is received.

29. A transmitting node, comprising: a processor, a memory, and a communication interface, wherein:
the memory is configured to store preset programs, and the processor is configured to read and execute the programs in the memory to:
receive Radio Link Control, RLC, Protocol Data Units, PDUs, transmitted by a central node, via the communication interface; and
recompose and then transmit the RLC PDUs via the communication interface according to a size of a scheduled transport block.

30. The transmitting node according to claim 29, wherein headers of the RLC PDUs carry at least Sequence Numbers, SNs; and
the processor is configured to:
recompose the RLC PDUs according to the SNs of the RLC PDUs according to the size of a scheduled transport block.

31. The transmitting node according to claim 30, wherein the processor is configured to:
determine the RLC PDUs to be recomposed, in an order of the SNs of the RLC PDUs, determine RLC SDUs and/or RLC SDU segments in each RLC PDU to be recomposed, and decompose the determined RLC SDUs and/or RLC SDU segments into an MAC SDU, wherein a size of the MAC SDU is less than or equal to the size of the transport block.

32. The transmitting node according to claim 31, wherein a header of the MAC SDU comprises information about the SN of each RLC PDU to be recomposed, and information about the RLC SDUs and/or the RLC SDU segments in each RLC PDU to be recomposed.

33. The transmitting node according to claim 32, wherein when the header of the MAC SDU comprises the information about the SN of each RLC PDU to be recomposed, and information about the RLC SDUs and/or the RLC SDU segments in each RLC PDU to be recomposed:
the header of the MAC SDU comprises the SN of each RLC PDU to be recomposed, and a length indicator set corresponding to the SN of each RLC PDU, wherein the length indicator set comprises a length indicator of each RLC SDU and/or RLC SDU segment belonging to the RLC PDU among the respective RLC SDUs and/or RLC SDU segments to be recomposed;
or,
the header of the MAC SDU comprises the SN of a first RLC PDU to be recomposed, and a quantity of RLC SDUs and/or RLC SDU segments to be recomposed, and a length indicator of each RLC SDU and/or RLC SDU segment to be recomposed, in each RLC PDU to be recomposed;
or,
the header of the MAC SDU comprises the SN of a first RLC PDU to be recomposed, and a length indicator of each RLC SDU and/or RLC SDU segment to be recomposed, in each RLC PDU to be recomposed, wherein total quantities of RLC SDUs and/or RLC SDU segments to be recomposed, in different RLC PDUs to be recomposed are same;
or,
the header of the MAC SDU comprises the SN of a first RLC PDU to be recomposed, and a length indicator and an end indicator of each RLC SDU and/or RLC SDU segment to be recomposed, in each RLC PDU to be recomposed, wherein the end indicator indicates whether the RLC SDU and/or the RLC SDU segment is an end of the RLC PDU comprising the RLC SDU and/or the RLC SDU segment.
